# EUROPÄISCHE PATENTSCHRIFT

(11) **EP 2 058 360 B1**
(45) Veröffentlichungstag und Bekanntmachung des Hinweises auf die Patenterteilung: **28.09.2011**
(21) Anmeldenummer: 08168365.8
(22) Anmeldetag: 05.11.2008
(51) Int. Cl.: C08J 9/00, C08L 25/04

(54) **Formteile mit dunkler Oberfläche und geringer Wärmeleitfähigkeit**
Molded parts with a dark surface and low heat conduction
Pièces moulées dotées d'une surface sombre et d'une conductivité thermique réduite

(30) Priorität: 06.11.2007 EP 07120072
(43) Veröffentlichungstag der Anmeldung: 13.05.2009
(73) Patentinhaber: BASF SE, 67056 Ludwigshafen (DE)
(72) Erfinder: Braun, Frank, 67063, Ludwigshafen (DE); Alteheld, Armin, 55543, Bad Kreuznach (DE); Hahn, Klaus, 67281, Kirchheim (DE); Bellin, Ingo, 68159, Mannheim (DE)

(56) Entgegenhaltungen:
- EP-A- 1 693 413
- WO-A-01/40362
- DE-U1- 20 108 311
- GB-A- 1 198 372
- US-A- 5 155 151
- US-A- 5 698 606
- US-A- 5 710 186
- US-A1- 2005 148 705
- US-B1- 6 465 533

## Beschreibung

Die vorliegende Erfindung betrifft ein expandierbares Styrolpolymerisat (EPS), enthaltend wenigstens einen IR-Reflektor und wenigstens ein dunkles Pigment, aus der Gruppe der Perylene, welches sich in einem Alkyd/Melamin-Einbrennlack durch eine Schwarzzahl ≥ 210 auszeichnet, welches im Wellenlängenbereich der Infrarotstrahlung von 750 bis 25000 nm transparent ist, ein Verfahren zur Herstellung dieses expandierbaren Styrolpolymerisates, einen Schaumstoff, hergestellt aus dem expandierbaren Styrolpolymerisat, ein Verfahren zur Herstellung solcher Schaumstoffe und die Verwendung dieses Schaumstoffes zur Wärmedämmung, zur thermischen Isolierung von Maschinen und Haushaltsgeräten und als Verpackungsmaterial.

Expandierbare Styrolpolymerisate enthaltend wenigstens einen IR-Reflektor sind aus dem Stand der Technik bereits bekannt.

EP 1 448 681 B1 offenbart ein helles expandierbares vinylaromatisches Polymer und ein Verfahren zur Herstellung desselben. Als IR-Reflektoren werden in dem vinylaromatischen Polymer gemäß EP 1 448 681 B1 Titandioxid oder Bariumsulfat eingesetzt. Das der Erfindung gemäß EP 1 448 681 B1 zugrunde liegende Problem besteht darin, dass bekannte athermane Partikel wie Ruß oder Graphit den entsprechenden Schaumstoffen, welche aus dem expandierbaren vinylaromatischen Polymer gemäß der genannten Schrift hergestellt werden, eine unansehnliche graue oder schwarze Färbung verleihen. Dunkle, expandierbare Styrolpolymerisate werden daher nicht offenbart.

US 5,811,180 offenbart spezielle Pigmente, welche, in Beschichtungsmaterialien eingesetzt, mit dieser Beschichtung behandelte Gegenstände schwer entflammbar machen. Beispiele für solche Pigmente sind gemäß US 5,811,180 Titandioxid in der Rutilmodifikation und rotes Eisenoxid mit Durchmessern von ungefähr 1 bis 2 µm sowie Pigmente aus Aluminium.

WO 2004/094539 A1 offenbart ein Schichtensystem und ein Verfahren zur Reduzierung der Temperatur in einem Innenraum durch Anbringen des Schichtensystems auf den Innenraum. Das Schichtensystem besteht aus zwei Schichten, in dem die erste Schicht wenigstens ein Pigment aus der Gruppe der Perylene enthält, welche für Lichtwellenlängen im Bereich des Infrarotlichts transparent sind, so dass dieses Licht durch die erste Schicht hindurchtritt, und von der darunter liegenden zweiten Schicht reflektiert wird.

WO 2005/078023 A2 offenbart schwarze Perylenpigmente, welche in hochmolekularen synthetischen organischen Materialien, beispielsweise Polyolefinen, Polyvinylchlorid, Polyimiden, Polycarbonaten, Polystyrol, Styrolcopolymeren und anderen, verwendet werden können. WO 2005/078023 offenbart nicht, dass die offenbarten Perylenpigmente vorteilhaft in expandierbaren Styrolpolymerisaten bzw. in daraus hergestellten Schaumstoffen eingesetzt werden können.

DE 201 08 311 U1 offenbart einen Trittschalldämmkörper, der expandiertes Styrolpolymerisat aufweist, wobei das Styrolpolymerisat eine Dichte von weniger als 15 kg/m³ aufweist und im Styrolpolymerisat mindestens ein teilchenförmiger Zusatzstoff gleichmäßig verteilt angeordnet ist, dessen Dichte höher als die Dichte des Styrolpolymerisats ist. Neben dem Styrolpolymerisat liegt auch mindestens ein athermaner Stoff als Zusatzstoff vor.

US 2005/0148705 A1 offenbart witterungsbeständige, pigmentierte Polystyrol-Extrudate und Artikel, welche daraus hergestellt worden sind. Die Extrudate enthalten neben Polystyrolhomo- oder Copolymeren wenigstens einen Lichtabsorber, wenigstens eine Verbindung ausgewählt aus niedrigmolekularen, gehinderten Aminen und wenigstens eine Verbindung ausgewählt aus der Gruppe bestehend aus hochmolekularen, gehinderten Aminen. Des Weiteren enthält die Zusammensetzung wenigstens ein Pigment und gegebenenfalls Ruß.

Der vorliegenden Erfindung liegt die Aufgabe zugrunde, expandierbare Styrolpolymerisate herzustellen, aus denen expandierte Styrolpolymerisate bzw. Schaumstoffe erhalten werden können, die eine geringe Wärmeleitfähigkeit aufweisen. Gleichzeitig sollen sich das aus dem erfindungsgemäßen expandierbaren Styrolpolymerisat hergestellte expandierte Styrolpolymerisat bzw. der Schaumstoff bei Einstrahlung von Licht, beispielsweise Sonnenlicht, nicht aufheizen, so dass sich die aus dem erfindungsgemäßen Material hergestellten Gegenstände nicht verformen. Des Weiteren ist es gewünscht, dass die expandierbaren Styrolpolymerisate eine dunkle Farbe aufweisen, damit bei der Herstellung, Verarbeitung und bei der Verwendung keine Verschmutzungen sichtbar werden.

Diese Aufgaben werden gelöst durch ein expandierbares Styrolpolymerisat enthaltend wenigstens einen IR-Reflektor und wenigstens ein dunkles Pigment aus der Gruppe der Perylene, welches sich in einem Alkyd/Melamin-Einbrennlack durch eine Schwarzzahl ≥ 210 auszeichnet, welches im Wellenlängenbereich der Infrarotstrahlung von 750 bis 25000 nm transparent ist.

Die erfindungsgemäßen expandierbaren Styrolpolymerisate sind in einer bevorzugten Ausführungsform Styrolhomopolymere oder Styrolcopolymere mit bis zu 40 Gew.-%, bezogen auf das Gewicht der Polymere, wenigstens eines weiteren ethylenisch ungesättigten Monomers, insbesondere Alkylstyrole, beispielsweise. Divinylbenzol oder α-Methylstyrol oder Acrylnitril. Auch Blends aus Polystyrol mit anderen Polymeren, insbesondere mit Kautschuk und Polyphenylenether, sind möglich.

Im Allgemeinen können alle dem Fachmann bekannten IR-Reflektoren verwendet werden, die Lichtwellen im Wellenlängenbereich des Infrarotlichts zwischen 750 und 25000 nm reflektieren. Bevorzugt werden Pigmente in Form von Plättchen, Schuppen, Stäbchen, Kristallen oder Flocken, welche eine ausreichend große reflektierende Flächen aufweisen.

In einer bevorzugten Ausführungsform ist der wenigstens eine IR-Reflektor ausgewählt aus der Gruppe bestehend aus Metallpigmenten wie Aluminium, Metallsulfiden wie Zinksulfid, Metalloxiden wie Titandioxid, Zinkoxid, Eisenoxid, Chromoxid oder Magnesiumoxid, Metallfluoriden wie Calciumfluorid oder Natriumfluorid, Metallsulfaten wie Calciumsulfat oder Bariumsulfat, Metallcarbonaten wie Calciumcarbonat, Silikaten wie Talkum, Kaolin oder Glimmer und Mischungen davon, besonders bevorzugt TiO₂.

Der eingesetzte IR-Reflektor weist im Allgemeinen eine Teilchengröße von 0,01 bis 100 µm, bevorzugt 0,1 bis 50 µm, besonders bevorzugt 1 bis 20 µm, auf.

In einer bevorzugten Ausführungsform liegt der wenigstens eine IR-Reflektor in dem erfindungsgemäßen expandierbaren Styrolpolymerisat in einer Menge von 0,05 bis 50 Gew.-%, bevorzugt 0,1 bis 30 Gew.-%, jeweils bezogen auf das expandierbare Styrolpolymerisat, vor.

Das in dem erfindungsgemäßen expandierbaren Styrolpolymerisat vorliegende wenigstens eine dunkle Pigment ist im Wellenlängenbereich der Infrarotstrahlung transparent. Transparent bezieht sich im Rahmen der vorliegenden Erfindung auf den Wellenlängenbereich von 750 bis 25000 nm, insbesondere 750 bis 2500 nm.

Dunkle Pigmente, die die oben genannten Merkmale aufweisen, sind dunkle Pigmente aus der Gruppe der Perylene. Diese Verbindungen weisen als charakteristische Einheit die folgende auf:

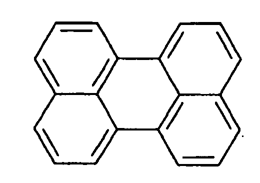

In einer bevorzugten Ausführungsform wird in dem erfindungsgemäßen expandierbaren Styrolpolymerisat wenigstens ein dunkles Perylenpigment eingesetzt, dass einer der folgenden Formeln la oder Ib entspricht:

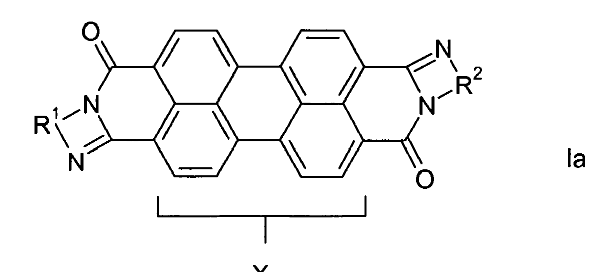

in 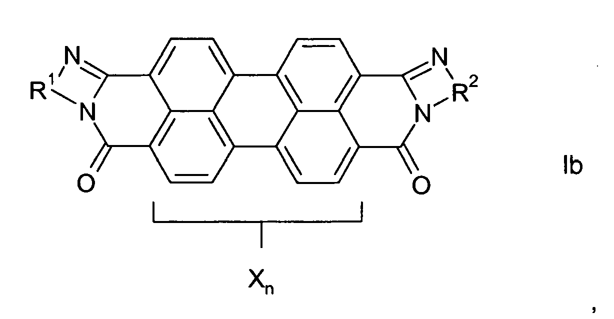 der die Variablen folgende Bedeutung haben:
- R¹, R²: unabhängig voneinander 1,2-Phenylen, 1,8-, 1,2- oder 2,3-Naphthylen oder 2,3- oder 3,4-Pyridylen, das jeweils ein- oder mehrfach durch C₁-C₁₂-Alkyl, C₁-C₆-Alkoxy, Hydroxy, Nitro und/oder Halogen substituiert sein kann,
- X: Halogen, insbesondere Chlor oder Brom;
- n: 0 bis 4,
oder eine Mischung der beiden Isomeren la und Ib.

Der Begriff "Mischung" soll dabei physikalische Mischungen wie auch bevorzugt feste Lösungen (Mischkristalle) der Verbindungen la und Ib umfassen.

Die Phenylen-, Naphthylen- und Pyridylenreste R¹ und R² in den Formeln la und Ib können ein- oder mehrfach durch C₁-C₁₂-Alkyl, insbesondere C₁-C₄-Alkyl, C₁-C₆-Alkoxy, vor allem C₁-C₄-Alkoxy, Hydroxy, Nitro und/oder Halogen, insbesondere Chlor oder Brom, substituiert sein.

Bevorzugt sind die Phenylen-, Naphthylen- und Pyridylenreste jedoch unsubstituiert, wobei die Phenylen- und Naphthylenreste bevorzugt und die Naphthylenreste besonders bevorzugt sind.

Die erfindungsgemäßen Perylenpigmente absorbieren im gesamten sichtbaren Spektralbereich und zeichnen sich damit durch ihren hohen Schwarzgrad, d.h. in einem Alkyd/Melamin-Einbrennlack durch eine Schwarzzahl ≥ 210, vorzugsweise ≥ 230, aus.

Dementsprechend ergeben sie tiefschwarze, neutrale Purtonfärbungen. In der Weißaufhellung werden neutrale Grautöne (z.B. Perylenpigmente la/lb mit R¹ = R² = Naphthylen) bis leicht bis deutlich blaustichige Färbungen (z.B. Perylenpigmente la/lb mit R¹ = R²= Phenylen) erhalten. Selbstverständlich können die Färbungen in üblicher Weise durch geringe Mengen anorganischer oder organischer Pigmente nuanciert werden, die während der Pigmentformierung, schon bei der Pigmentsynthese oder erst dem formierten Perylenpigment zugegeben werden können.

Die erfindungsgemäß einsetzbaren Pigmente weisen in der Regel eine Primärteilchengröße < 800 nm, bevorzugt < 500 nm, besonders bevorzugt < 200 nm, auf und sind dispergierweich, d.h. sie weisen z.B. bei der Kunststoffeinfärbung eine Dispergierhärte DH < 5 gemäß DIN 53775, Blatt 7, auf.

Die erfindungsgemäß einsetzbaren Pigmente können nach dem Fachmann bekannten Verfahren hergestellt werden und oder sind kommerziell erhältlich. Ein geeignetes Herstellungsverfahren wird beispielsweise in WO 2005/078023 offenbart.

In einer bevorzugten Ausführungsform liegt das wenigstens eine dunkle Pigment in einer Menge von 0,01 bis 10 Gew.-%, besonders bevorzugt 0,1 bis 8 Gew.-%, jeweils bezogen auf das expandierbare Styrolpolymerisat, vor.

In einer bevorzugten Ausführungsform liegen neben dem wenigstens einen Pigment zusätzlich so genannte Pigmentsynergisten in dem erfindungsgemäßen expandierbaren Styrolpolymerisat vor.

Pigmentsynergisten sind Verbindungen, die den Pigmentchromophor ganz oder teilweise in ihrer Molekülstruktur enthalten und vorzugsweise saure oder basische Gruppen aufweisen. Dabei muss die Struktur des Pigmentsynergisten nicht mit der Struktur des Pigments, dessen Kristallisation beeinflusst werden soll, übereinstimmen. So können im vorliegenden Fall nicht nur Pigmentsynergisten auf Basis der Perylenstruktur, sondern z.B. auch solche auf Basis der Kupferphthalocyaninstruktur eingesetzt werden.

Besonders geeignete und ebenfalls erfindungsgemäße Pigmentsynergisten können auf einem oder beiden Isomeren der Formel Ia' oder Ib' 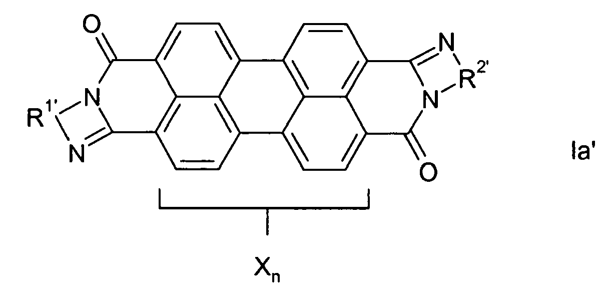 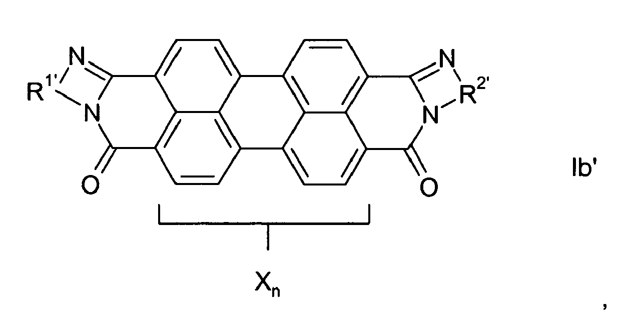 basieren, in der die Variablen folgende Bedeutung haben:
- R^{1'}, R^{2'}: unabhängig voneinander Phenylen, Naphthylen oder Pyridylen, das jeweils ein- oder mehrfach durch -COO⁻ M⁺, -COOR³, -CONR³R⁴, -COC⁻ N⁺R³R⁴R⁵R⁶, -SO₂NR³R⁴, -CH₂NR³R⁴, -CH₂N⁺R³R⁴R⁵R⁶, -COO⁻ und/oder -CH₂R⁷ substituiert ist und zusätzlich ein- oder mehrfach durch C₁-C₁₂-Alkyl, C₁-C₆-Alkoxy, Hydroxy, Nitro und/oder Halogen substituiert seinkann,
- R³, R⁴, R⁵, R⁶: unabhängig voneinander Wasserstoff; C₁-C₁₂-Alkyl oder C₂-C₁₂-Alkenyl, dessen Kohlenstoffkette jeweils durch eine oder mehrere Gruppierungen -O-, -S-, -NR⁸-, -CO- oder -SO₂- unterbrochen sein kann und/oder das ein- oder mehrfach durch Hydroxy, Halogen, Aryl, C₁-C₄-Alkoxy und/oder Acetyl substituiert sein kann, C₃-C₈-Cycloalkyl, dessen Kohlenstoffgerüst durch eine oder mehrere Gruppierungen -O-, -S-, -NR⁸- oder -CO- unterbrochen sein kann und/oder durch Acetyl substituiert sein kann,
- R⁷: Phthalimidyl;
- R⁸: Wasserstoff oder C₁-C₈-Alkyl;
- M⁺: Wasserstoff oder ein Metallkation, insbesondere ein Alkalimetallkation, vor allem Natrium oder Kalium,
- X: Halogen, insbesondere Chlor oder Brom,
- n: 0 bis 4.

Weiterhin sind als Pigmentsynergisten Verbindungen der Formel Ia' und/oder Ib' geeignet, die an den Resten R^{1'} und R^{2'} durch Sulfonsäuregruppen, die als Salz vorliegen können, substituiert sind. In der US-A-2004/0215015 wird die Verwendung dieser Verbindungen für flüssigkristalline Systeme beschrieben.

Die Anwesenheit von Pigmentsynergisten wirkt sich oftmals auch positiv auf die Dispergierbarkeit und die Flockungsstabilität der erfindungsgemäßen Perylenpigmente im Anwendungsmedium und damit auch auf die Rheologie des Anwendungsmediums aus.

Die Dispergierbarkeit der erfindungsgemäßen Perlyenpigmente kann zudem oft dadurch verbessert werden, dass man die Pigmente mit herkömmlichen Additiven in Kontakt bringt, die an den für die Pigmentsynergisten genannten Stellen des Gesamtherstellungsprozesses oder aber erst bei der Anwendung des Perylenpigments zum Einsatz kommen können. Neben Additiven auf Basis von Kolophoniumderivaten sind insbesondere auch für die Kunststoffeinfärbung Additive auf Basis von natürlichen und synthetischen Wachsen geeignet. Beispielhaft seien Wachse auf Basis von Polyethylen und von Polypropylen, die auch oxidiert sein können, von Polyethylenoxid, von ethoxylierten Fettalkoholen, von Polyethylenoxid/Polypropylenoxid/Blockcopolymerisaten, von Fettsäureestern (z.B. Montanwachsen), von Fettsäureamiden und von Ethylen/Vinylacetat-Copolymerisaten genannt.

In einer bevorzugten Ausführungsform liegt der wenigstens eine Pigmentsynergist, falls vorhanden, in einer Menge von 0,01 bis 10 Gew.-% vor.

Neben wenigstens einen IR-Reflektor und dem wenigstens einen dunklen Pigment, die in dem erfindungsgemäßen Styrolpolymerisat zwingend vorliegen, können die Styrolpolymerisate die üblichen und bekannten Hilfsmittel und Zusatzstoffe enthalten, beispielsweise Flammschutzmittel, Keimbildner, UV-Stabilisatoren, Kettenüberträger, Treibmittel, Weichmacher, Antioxidantien, Beschichtungsmittel, Hydrophobierungsmittel und/oder Füllstoffe, jeweils in den üblichen Mengen.

In dem erfindungsgemäßen expandierbaren Styrolpolymerisat sind in einer bevorzugten Ausführungsform das Styrolpolymerisat, der wenigstens eine IR-Reflektor und das wenigstens eine dunkle Pigment homogen miteinander vermischt. In einer weiteren bevorzugten Ausführungsform liegt der wenigstens eine IR-Reflektor homogen in dem Styrolpolymerisat verteilt und das wenigstens eine dunkle Pigment an der Oberfläche des expandierbaren Styrolpolymerisates vor.

Die vorliegende Erfindung betrifft auch ein Verfahren zur Herstellung des erfindungsgemäßen expandierbaren Styrolpolymerisates, in dem das Styrolpolymerisat, der wenigstens eine IR-Reflektor und das wenigstens eine dunkle Pigment homogen miteinander vermischt sind, durch Mischen des expandierbaren Styrolpolymerisats, des wenigstens einen IR-Reflektors und des wenigstens einen dunklen Pigments.

Die Einarbeitung des wenigstens einen IR-Reflektors und des wenigstens einen dunklen Pigments in die EPS-Partikel kann nach unterschiedlichen Verfahren erfolgen, die gewährleisten, dass alle in dem erfindungsgemäßen expandierbaren Styrolpolymerisat vorliegenden Komponenten homogen gemischt werden. Bei einer bevorzugten Ausführungsform vermischt man den wenigstens einen IR-Reflektor und das wenigstens eine dunkle Pigment mit einer Schmelze des Styrolpolymerisates, vorzugsweise in einem Extruder. Dabei wird der Schmelze gleichzeitig das Treibmittel zudosiert. Man kann den wenigstens einen IR-Reflektor und das wenigstens eine dunkle Pigment auch in eine Schmelze von treibmittelhaltigem Styrolpolymerisat einarbeiten, wobei zweckmäßigerweise ausgesiebte Randfraktionen eines Perlspektrums von bei einer Suspensionspolymerisation entstandenen treibmittelhaltigen Polystyrolperlen eingesetzt werden. Die Treibmittel und wenigstens einen IR-Reflektor und wenigstens ein dunkles Pigment enthaltende Polystyrolschmelze wird ausgepresst und zu treibmittelhaltigem Granulat zerkleinert. Um ein Aufschäumen zu vermeiden, sollte nach dem Auspressen unter Druck rasch abgekühlt werden. Man führt daher zweckmäßigerweise eine Unterwassergranulierung unter Druck durch.

Wird die Polymerschmelze nicht unter Druck behandelt, so kommt es zu einem Aufschäumen des expandierbaren Styrolpolymerisats, wobei ein expandiertes Styrolpolymerisat gebildet wird. In einer bevorzugten Ausführungsform geschieht dieses direkte Aufschäumen durch Auspressen der treibmittelhaltigen Schmelze durch eine entsprechende Düse, so dass direkt expandierte Platten in der gewünschten Größe aus dem expandierbaren Styrolpolymerisat gebildet werden. In einer weiteren Ausführungsform wird die Schmelze durch eine andere geeignete Düse gepresst, so dass expandierte Partikel aus dem expandierbaren Styrolpolymerisat gebildet werden. Die vorliegende Erfindung betrifft auch ein expandiertes Styrolpolymerisat, enthaltend wenigstens einen IR-Reflektor und wenigstens ein dunkles Pigment, welches im Wellenlängenbereich der Infrarotstrahlung transparent ist. In dem erfindungsgemäßen expandierten Styrolpolymerisat sind in einer bevorzugten Ausführungsform das Styrolpolymerisat, der wenigstens eine IR-Reflektor und das wenigstens eine dunkle Pigment homogen miteinander vermischt. In einer weiteren bevorzugten Ausführungsform liegt der wenigstens eine IR-Reflektor homogen in dem Styrolpolymerisat verteilt und das wenigstens eine dunkle Pigment an der Oberfläche des expandierten Styrolpolymerisates vor.

Die vorliegende Erfindung betrifft daher auch ein Verfahren zur Herstellung eines erfindungsgemäßen expandierten Styrolpolymerisats, indem die erfindungsgemäßen expandierbaren Styrolpolymerisate, in dem das Styrolpolymerisat, der wenigstens eine IR-Reflektor und das wenigstens eine dunkle Pigment homogen miteinander vermischt sind, aufgeschäumt werden.

Es ist auch möglich, den Styrolpolymerisaten, die wenigstens einen IR-Reflektor und wenigstens ein dunkles Pigment enthalten, das Treibmittel in einem gesonderten Verfahrensschritt zuzusetzen. Hierbei werden die Granulate vorzugsweise in wässriger Suspension mit dem Treibmittel imprägniert.

Der wenigstens eine IR-Reflektor und das wenigstens eine dunkle Pigment können der Polymerschmelze direkt zugesetzt werden. Man kann den wenigstens einen IR-Reflektor und das wenigstens eine dunkle Pigment auch in Form eines Konzentrats in dem entsprechenden Polymer, bevorzugt Polystyrol, der Schmelze zusetzen. Bevorzugt werden aber Polymergranulat, insbesondere Polystyrolgranulat, der wenigstens eine IR-Reflektor und das wenigstens eine dunkle Pigment zusammen in einen Extruder gegeben, das Polymer aufgeschmolzen und mit dem wenigstens einen IR-Reflektor und dem wenigstens einen dunklen Pigment vermischt.

Es ist grundsätzlich auch möglich, den wenigstens einen IR-Reflektor und das wenigstens eine dunkle Pigment bereits im Verlauf der Suspensionspolymerisation zu inkorporieren. Sie können hierbei vor der Suspendierung den Styrolmonomeren zugesetzt oder im Verlaufe, bevorzugt während der ersten Hälfte des Polymerisationscyclus, dem Reaktionsansatz zugefügt werden. Das Treibmittel wird bevorzugt im Verlaufe der Polymerisation zugegeben, es kann jedoch auch hinterher dem Styrolpolymerisat zugegeben werden. Für die Stabilität der Suspension ist es günstig, wenn bei Beginn der Suspensionspolymerisation eine Lösung von Polystyrol, bzw. einem entsprechenden Styrolcopolymerisat, in Styrol, bzw. der Mischung von Styrol und dem oder den entsprechenden Comonomeren, vorliegt. Bevorzugt geht man dabei von einer Lösung von Polystyrol in Styrol, wobei die Konzentration des Polymers in dem Monomer im Allgemeinen 0,5 bis 30 Gew.-%, bevorzugt 5 bis 20 Gew.-% beträgt, aus. Man kann dabei frisches Polystyrol in Monomeren auflösen, zweckmäßigerweise setzt man aber so genannte Randfraktionen ein, die bei der Auftrennung des bei der Herstellung von expandierbarem Polystyrol anfallenden Perlspektrums als zu große oder zu kleine Perlen ausgesiebt werden. In der Praxis weisen derartige nicht verwendbare Randfraktionen Durchmesser von größer als 2,0 mm bzw. kleiner als 0,2 mm auf. Auch Polystyrol-Recyclat und Polystyrol-Schaumstoff-Recyclat können eingesetzt werden. Eine andere Möglichkeit besteht darin, dass man Styrol in Substanz bis zu einem Umsatz von 0,5 bis 70% vorpolymerisiert und das Vorpolymerisat zusammen mit dem wenigstens einen IR-Reflektor und dem wenigstens einen dunklen Pigment in der wässrigen Phase suspendiert und auspolymerisiert.

Das Treibmittel wird in den üblichen Mengen von etwa 3 bis 10 Gew.-% bezogen auf das Gewicht des Polymeren, zugesetzt. Als Treibmittel eingesetzt werden üblicherweise aliphatische Kohlenwasserstoffe mit 3 bis 10, vorzugsweise 4 bis 6 Kohlenstoffatomen, beispielsweise n-Pentan, iso-Pentan oder Mischungen davon.

Die vorliegende Erfindung betrifft auch ein Verfahren zur Herstellung eines erfindungsgemäßen expandierbaren Styrolpolymerisates, in dem der wenigstens eine IR-Reflektor homogen in dem erfindungsgemäßen Styrolpolymerisat vermischt ist, und das wenigstens eine dunkle Pigment an der Oberfläche des expandierbaren Styrolpolymerisates vorliegt, durch Mischen des expandierbaren Styrolpolymerisates und des wenigstens einen IR-Reflektors und anschließendes Beschichten des erhaltenen expandierbaren Styrolpolymerisates enthaltend wenigstens einen IR-Reflektor mit dem wenigstens einen dunklen Pigment. Das Mischen des expandierbaren Styrolpolymerisates und des wenigstens einen IR-Reflektors kann wie oben beschrieben erfolgen. Das Beschichten mit dem wenigstens einen dunklen Pigment kann nach dem Fachmann bekannten Verfahren erfolgen, beispielsweise Besprühen, Tränken oder Auftrommeln.

Die vorliegende Erfindung betrifft auch ein Verfahren zur Herstellung eines erfindungsgemäßen expandierten Styrolpolymerisates, in dem der wenigstens eine IR-Reflektor homogen in dem expandierten Styrolpolymerisat vermischt ist, und das wenigstens eine dunkle Pigment an der Oberfläche des expandierten Styrolpolymerisates vorliegt, durch Aufschäumen eines entsprechenden erfindungsgemäßen expandierbaren Styrolpolymerisates. Eine weiteres mögliches Verfahren zur Herstellung der genannten expandierten Styrolpolymerisate umfasst das Mischen des expandierbaren Styrolpolymerisates und des wenigstens einen IR-Reflektors, Aufschäumen des expandierbaren Styrolpolymerisates und anschließendes Beschichten des erhaltenen expandierten Styrolpolymerisates enthaltend wenigstens einen IR-Reflektor mit dem wenigstens einen dunklen Pigment. Mischen, Aufschäumen und Beschichten kann nach den oben beschriebenen Verfahren erfolgen.

Die vorliegende Erfindung betrifft auch ein Verfahren zur Herstellung von Schaumstoffen durch Herstellen von erfindungsgemäßen expandierbaren Styrolpolymerisaten und Aufschäumen dieser expandierbaren Styrolpolymerisate. Dabei ist es erfindungsgemäß möglich, dass sich das wenigstens eine dunkle Pigment an der Oberfläche des expandierbaren Styrolpolymerisates oder in homogener Mischung mit dem expandierbaren Styrolpolymerisat und der, wenigstens eine, IR-Reflektor in homogener Mischung mit dem expandierbaren Styrolpolymerisat befindet.

Die Verschäumung der Treibmittel enthaltenden EPS-Partikel zu Schaumstoffen erfolgt üblicherweise ebenfalls nach dem im Stand der Technik bekannten Verfahren, indem sie zunächst mit Wasserdampf in offenen oder geschlossenen Vorschäumern vorgeschäumt werden. Die vorgeschäumten Perlen werden danach in gasdurchlässigen Formen mittels Wasserdampf zu Formteilen oder Platten verschweißt. Die expandierten Polystyrolpartikel weisen im Allgemeinen eine mittlere Partikelgröße von 1 bis 10 mm, insbesondere von 2 bis 8 mm, auf. Die vorliegende Erfindung betrifft auch ein expandiertes Styrolpolymerisat, enthaltend wenigstens einen IR-Reflektor und wenigstens ein dunkles Pigment, welches im Wellenlängenbereich der Infrarotstrahlung transparent ist. Die erfindungsgemäßen vorgeschäumten, expandierten Styrolpolymerisate in Form von Partikeln bzw. Perlen können dann in einem zweiten Schritt in gasdurchlässigen Formen mittels Wasserdampf zu Formteilen oder Platten verschweißt werden.

Die vorliegende Erfindung betrifft auch Schaumstoffe, welche aus den erfindungsgemäßen expandierbaren Styrolpolymerisaten herstellbar sind, bevorzugt hergestellt werden.

Die erfindungsgemäßen Schaumstoffe weisen im Allgemeinen eine Dichte von 5 bis 200 g/l, bevorzugt von 8 bis 100 g/l und insbesondere von 10 bis 80 g/l, auf. Bezüglich weiterer Details der Schaumstoffe gilt das oben Gesagte.

Die aus den erfindungsgemäßen expandierbaren Styrolpolymerisaten hergestellten Schaumstoffe zeichnen sich durch eine hervorragende Wärmeisolierung aus. Des Weiteren zeigen das erfindungsgemäße expandierbare Styrolpolymerisat und die daraus hergestellten Schaumstoffe eine dunkle Farbe, die gewährleistet, dass bei der Herstellung, Verarbeitung, Transport und Verwendung entstehende Verschmutzungen nicht stören. Die aus dem erfindungsgemäßen expandierbaren Styrolpolymerisat hergestellten Schaumstoffe heizen sich des Weiteren bei Bestrahlung mit Sonnenlicht nicht auf, so dass es nicht zu einer nachteiligen Verformung aufgrund von Erhitzen kommt.

Die vorliegende Erfindung betrifft auch die Verwendung des erfindungsgemäßen Schaumstoffes zur Wärmedämmung, beispielsweise von Gebäuden oder Gebäudeteilen, die so genannte Perimeterdämmung. Dabei können die erfindungsgemäßen Schaumstoffe auf der Außen- als auch auf der Innenseite der zu dämmenden Teile aufgebracht werden.

Die vorliegende Erfindung betrifft auch die Verwendung des erfindungsgemäßen Schaumstoffes zur thermischen Isolierung von Maschinen und Haushaltsgeräten, beispielsweise Backöfen, Kühlschränken, Gefriertruhen, Warmwasserbereitern oder Isolierkannen.

Die vorliegende Erfindung betrifft auch die Verwendung des erfindungsgemäßen Schaumstoffes als Verpackungsmaterial. Dabei kann der Schaumstoff teilchenförmig verwendet werden, so dass der zu verpackende Gegenstand in einer losen Schüttung liegt. Es ist auch möglich, dass aus dem erfindungsgemäßen Schaumstoff ein einteiliges Werkstück hergestellt wird, in das der zu verpackende Gegenstand eingebettet wird.

## Patentansprüche

1. Expandierbares Styrolpolymerisat enthaltend wenigstens einen IR-Reflektor und wenigstens ein dunkles Pigment aus der Gruppe der Perylene, , welches sich in einem Alkyd/Melamin-Einbrennlack durch eine Schwarzzahl ≥ 210 auszeichnet, welches im Wellenlängenbereich der Infrarotstrahlung von 750 bis 25000 nm transparent ist.

2. Styrolpolymerisat nach Anspruch 1, **dadurch gekennzeichnet, dass** es ein Styrolhomopolymer oder ein Styrolcopolymer mit bis zu 40 Gew.-%, bezogen auf das Gewicht des Polymers, wenigstens eines weiteren ethylenisch ungesättigten Monomers ist.

3. Styrolpolymerisat nach Anspruch 1 order 2, **dadurch gekennzeichnet, dass** der wenigstens eine IR-Reflektor ausgewählt ist aus der Gruppe bestehend aus Metallpigmenten, Metallsulfiden, Metalloxiden, Metallfluoriden, Metallsulfaten, Metallcarbonaten, Silikaten und Mischungen davon.

4. Styrolpolymerisat nach einem der Ansprüche 1 bis 3, **dadurch gekennzeichnet, dass** das wenigstens eine dunkle Pigment in einer Menge von 0,01 bis 10 Gew.- %, bezogen auf das expandierbare Styrolpolymerisat, vorliegt.

5. Styrolpolymerisat nach einem der Ansprüche 1 bis 4, **dadurch gekennzeichnet, dass** der wenigstens eine IR-Reflektor in einer Menge von 0,05 bis 50 Gew.-%, bezogen auf das expandierbare Styrolpolymerisat, vorliegt.

6. Styrolpolymerisat nach einem der Ansprüche 1 bis 5, **dadurch gekennzeichnet, dass** das Styrolpolymerisat, der wenigstens eine IR-Reflektor und das wenigstens eine dunkle Pigment homogen miteinander vermischt sind.

7. Styrolpolymerisat nach einem der Ansprüche 1 bis 5, **dadurch gekennzeichnet, dass** der wenigstens eine IR-Reflektor homogen in dem Styrolpolymerisat verteilt und das wenigstens eine dunkle Pigment an der Oberfläche des expandierbaren Styrolpolymerisates vorliegt.

8. Verfahren zur Herstellung des expandierbaren Styrolpolymerisates nach Anspruch 6 durch Mischen des expandierbaren Styrolpolymerisats, des wenigstens einen IR-Reflektors und des wenigstens einen dunklen Pigments.

9. Verfahren, zur Herstellung eines expandierbaren Styrolpolymerisates nach Anspruch 7 durch Mischen des expandierbaren Styrolpolymerisates und des wenigstens einen IR-Reflektors und anschließendes Beschichten des erhaltenen expandierbaren Styrolpolymerisates enthaltend wenigstens einen IR-Reflektor mit dem wenigstens einen dunklen Pigment.

10. Expandiertes Styrolpolymerisat, enthaltend wenigstens einen IR-Reflektor und wenigstens ein dunkles Pigment aus der Gruppe der Perylene, welches sich in einem Alkyd/Melamin-Einbrennlack durch eine Schwarzzahl ≥ 210 auszeichnet, welches im Wellenlängenbereich der Infrarotstrahlung von 750 bis 25000 nm transparent ist.

11. Expandiertes Styrolpolymerisat nach Anspruch 10, **dadurch gekennzeichnet, dass** das Styrolpolymerisat, der wenigstens eine IR-Reflektor und das wenigstens eine dunkle Pigment homogen miteinander vermischt sind.

12. Expandiertes Styrolpolymerisat nach Anspruch 10, **dadurch gekennzeichnet, dass** der wenigstens eine IR-Reflektor homogen in dem Styrolpolymerisat verteilt und das wenigstens eine dunkle Pigment an der Oberfläche des expandierten Styrolpolymerisates vorliegt.

13. Verfahren zur Herstellung eines expandierten Styrolpolymerisats nach Anspruch 11, **dadurch gekennzeichnet, dass** expandierbare Styrolpolymerisate nach Anspruch 6 aufgeschäumt werden.

14. Verfahren zur Herstellung eines expandierten Styrolpolymerisats nach Anspruch 12, **dadurch gekennzeichnet, dass** expandierbare Styrolpolymerisate nach Anspruch 7 aufgeschäumt werden.

15. Schaumstoff, herstellbar aus dem expandierbaren Styrolpolymerisat nach Anspruch 6 oder 7.

16. Verfahren zur Herstellung von Schaumstoffen nach Anspruch 15 durch Herstellen von expandierbaren Styrolpolymerisaten nach Anspruch 8 oder 9 und Aufschäumen dieser expandierbaren Styrolpolymerisate.

17. Verwendung eines Schaumstoffes nach Anspruch 15 zur Wärmedämmung, zur thermischen Isolierung von Maschinen und Haushaltsgeräten und als Verpackungsmaterial.

## Claims

1. An expandable styrene polymer comprising at least one IR reflector and at least one dark-colored pigment from the group of the perylenes, a feature of which is a black value ≥ 210 in an alkyol/melamine stoving lacquer and which is transparent in the wavelength range of infrared radiation from 750 to 25 000 nm.

2. The styrene polymer according to claim 1, which is a styrene homopolymer or a styrene copolymer with up to 40% by weight, based on the weight of the polymer, of at least one further ethylenically unsaturated monomer.

3. The styrene polymer according to claim 1 or 2, wherein the at least one IR reflector has been selected from the group consisting of metal pigments, metal sulfides, metal oxides, metal fluorides, metal sulfates, metal carbonates, silicates, and mixtures thereof.

4. The styrene polymer according to any of claims 1 to 3, wherein the amount of the at least one dark-colored pigment is from 0.01 to 10% by weight, based on the expandable styrene polymer.

5. The styrene polymer according to any of claims 1 to 4, wherein the amount of the at least one IR reflector is from 0.05 to 50% by weight, based on the expandable styrene polymer.

6. The styrene polymer according to any of claims 1 to 5, wherein the styrene polymer, the at least one IR reflector, and the at least one dark-colored pigment have been mixed homogeneously with one another.

7. The styrene polymer according to any of claims 1 to 5, wherein the at least one IR reflector has homogeneous distribution in the styrene polymer and the at least one dark-colored pigment is present at the surface of the expandable styrene polymer.

8. A process for the production of the expandable styrene polymer according to claim 6 via mixing of the expandable styrene polymer, of the at least one IR reflector, and of the at least one dark-colored pigment.

9. A process for the production of an expandable styrene polymer according to claim 7 via mixing of the expandable styrene polymer and of the at least one IR reflector, and subsequent coating of the resultant expandable styrene polymer comprising at least one IR reflector with the at least one dark-colored pigment.

10. An expanded styrene polymer comprising at least one IR reflector and at least one dark-colored pigment from the group of the perylenes, a feature of which is a black value ≥ 210 in an alkyol/melamine stoving lacquer and which is transparent in the wavelength range of infrared radiation from 750 to 25 000 nm.

11. The expanded styrene polymer according to claim 10, wherein the styrene polymer, the at least one IR reflector, and the at least one dark-colored pigment have been mixed homogeneously with one another.

12. The expanded styrene polymer according to claim 10, wherein the at least one IR reflector has homogeneous distribution in the styrene polymer and the at least one dark-colored pigment is present at the surface of the expanded styrene polymer.

13. A process for the production of an expanded styrene polymer according to claim 11, which comprises foaming expandable styrene polymers according to claim 6.

14. A process for the production of an expanded styrene polymer according to claim 12, which comprises foaming expandable styrene polymers according to claim 7.

15. A foam that can be produced from the expandable styrene polymer according to claim 6 or 7.

16. A process for the production of foams according to claim 15 via production of expandable styrene polymers according to claim 8 or 9 and foaming of these expandable styrene polymers.

17. The use of a foam according to claim 15 for thermal insulation, including that of machines and of household equipment, and as packaging material.

## Revendications

1. Polymérisat de styrène expansible, contenant au moins un réflecteur IR et au moins un pigment foncé choisi dans le groupe des pérylènes, qui dans une peinture alkyde/mélamine à séchage au four se distingue par un indice de noir ≥ 210, qui est transparent dans la gamme de longueurs d'onde du rayonnement infrarouge de 750 à 25 000 nm.

2. Polymérisat de styrène selon la revendication 1, **caractérisé en ce qu'**il est un homopolymère de styrène ou un copolymère de styrène comportant jusqu'à 40 % en poids, par rapport au poids du polymère, d'au moins un autre monomère à insaturation éthylénique.

3. Polymérisat de styrène selon la revendication 1 ou 2, **caractérisé en ce que** ledit au moins un réflecteur IR est choisi dans le groupe constitué par des pigments métalliques, des sulfures métalliques, des oxydes métalliques, des fluorures métalliques, des sulfates métalliques, des carbonates métalliques, des silicates et des mélanges de ceux-ci.

4. Polymérisat de styrène selon l'une quelconque des revendications 1 à 3, **caractérisé en ce qu'**au moins un pigment foncé est présent en une quantité de 0,01 à 10 % en poids, par rapport au polymérisat de styrène expansible.

5. Polymérisat de styrène selon l'une quelconque des revendications 1 à 4, **caractérisé en ce que** ledit au moins un réflecteur IR est présent en une quantité de 0,05 à 50 % en poids, par rapport au polymérisat de styrène expansible.

6. Polymérisat de styrène selon l'une quelconque des revendications 1 à 5, **caractérisé en ce qu'**on mélange entre eux de façon homogène le polymérisat de styrène, ledit au moins un réflecteur IR et ledit au moins un pigment foncé.

7. Polymérisat de styrène selon l'une quelconque des revendications 1 à 5, **caractérisé en ce que** ledit au moins un réflecteur IR est dispersé de façon homogène et ledit au moins un pigment foncé est présent à la surface du polymérisat de styrène expansible.

8. Procédé pour la préparation du polymérisat de styrène expansible selon la revendication 6, par mélange du polymérisat de styrène expansible, dudit au moins un réflecteur IR et dudit au moins un pigment foncé.

9. Procédé pour la préparation d'un polymérisat de styrène expansible selon la revendication 7, par mélange du polymérisat de styrène expansible et dudit au moins un réflecteur IR et enduction subséquente du polymérisat de styrène expansible obtenu, contenant au moins un réflecteur IR, avec ledit au moins un pigment foncé.

10. Polymérisat de styrène expansé, contenant au moins un réflecteur IR et au moins un pigment foncé choisi dans le groupe des pérylènes, qui dans une peinture alkyde/mélamine à séchage au four se distingue par un indice de noir ≥ 210, qui est transparent dans la gamme de longueurs d'onde du rayonnement infrarouge de 750 à 25 000 nm.

11. Polymérisat de styrène expansé selon la revendication 10, **caractérisé en ce qu'**on mélange entre eux de façon homogène le polymérisat de styrène, qui contient au moins un réflecteur IR, et ledit au moins un pigment foncé.

12. Polymérisat de styrène expansé selon la revendication 10, **caractérisé en ce** ledit au moins un réflecteur IR est dispersé de façon homogène dans le polymérisat de styrène et ledit au moins un pigment foncé se trouve à la surface du polymérisat de styrène expansé.

13. Procédé pour la préparation d'un polymérisat de styrène expansé selon la revendication 11, **caractérisé en ce que** des polymérisats de styrène expansibles selon la revendication 6 sont expansés.

14. Procédé pour la préparation d'un polymérisat de styrène expansé selon la revendication 12, **caractérisé en ce que** des polymérisats de styrène expansibles selon la revendication 7 sont expansés.

15. Mousse, pouvant être produite à partir du polymérisat de styrène expansible selon la revendication 6 ou 7.

16. Procédé pour la production de mousses selon la revendication 15, par préparation de polymérisats de styrène expansibles selon la revendication 8 ou 9 et expansion de ce polymérisat de styrène expansible.

17. Utilisation d'une mousse selon la revendication 15, pour le calorifugeage, l'isolation thermique de machines et d'appareils ménagers et comme matériau d'emballage.
